# EUROPEAN PATENT APPLICATION

(11) **EP 2 712 204 A1**
(43) Date of publication of application: **26.03.2014**
(21) Application number: 12185795.7
(22) Date of filing: 25.09.2012
(51) Int. Cl.: H04N 21/41, H04N 21/4223, H04N 21/431, H04N 21/441, H04N 21/442, H04N 21/45, H04N 21/488, H04N 21/658, H04N 21/61, H04N 21/437, H04N 21/4425, H04N 21/858

(54) **System and method to process information data from a multimedia receiver device**

(71) Applicant: Nagravision S.A., 1033 Cheseaux-sur-Lausanne (CH)
(72) Inventor: Ramachandran, Vaidyanathan, 600073 Chennai (IN); Kaliamoorthi, Amudha, 560093 Bangalore (IN); Bajaj, Haresh, 382475 Ahmedabad (IN); Sinkar, Hrishikesh, 400055 Mumbai (IN)
(74) Representative: Leman Consulting S.A.

(57) **Abstract**

A system and a method for transmitting to a managing center, by a handheld device, information data related to a multimedia receiver device configured at least to receive and display digital audio / video content from a stream broadcast unidirectionally by a service provider. The multimedia receiver device executes a self test program to generate information data related to a status of the multimedia receiver device. The multimedia receiver device displays the generated information data in form of an image representing a one dimensional or two dimensional barcode comprising at least a unique identifier, time information and specific status data associated to the multimedia receiver device. The handheld device acquires and sends the image to the managing center for processing the received image and extracting the specific status data related to the multimedia receiver device.

## Description

### Field of the invention

The invention relates to a system and method to report information data retrieved from a digital multimedia receiver device to a service provider for processing. In particular, the retrieved information data are specific to a given multimedia receiver device and user profile.

### Technical background

The most of low cost digital multimedia receiver devices presently in service do not support a return channel to a head end or service provider due to limited hardware /software and connection capabilities. When a user wants to purchase an on-demand service as VOD (Video On Demand), a subscription, or interact in general with a service provider for other benefits, it becomes necessary to establish an alternative communication channel independent form the multimedia receiver.

Several solutions are based on portable devices such as personal computers, tablet computers, smart phones etc. able to communicate with services providers via a mobile network.

In the field of interactive advertising, document US2012/0084807AI discloses a system for interactive video advertising containing a video display capable of displaying an advertisement tag, wherein the advertisement tag prompts for user interaction and allows a registry of an interaction history. The video display is a device such as a television, monitor, digital video recorder, video game system, portable multimedia device, etc. The advertisement tag is a visual and/or audible notification. Upon display of an advertisement tag, the user is thereby prompted for interaction with the system. By interacting with the system after an advertisement tag is displayed, an interaction history archive, in the form of an advertising cart user interface is populated with an interaction history record. The user interface comprises controls that allow data viewing, saving, deleting, sorting, distributing, or combinations thereof. The user interacts with the system through a remote control, Bluetooth™ device, infrared device, radio frequency device, computer mouse, trackball, touchpad, pointing stick, keyboard, barcode reader, or any other pointing or capturing device.

Document US2010096448A1 describes a method and apparatus for bar code data interchange. This apparatus is generally comprised of a bar code reader which is capable of scanning bar codes displayed on a variety of video displays, a decoder which transforms the scanned bar code into data which may then be manipulated in a variety of ways by a host device, such as a computer, personal digital assistant (PDA) or any other device in which bar code data input may be desirable. In a preferred embodiment, a consumer will scan in bar code information from a video display, such as a television screen, through the use of a high scan rate LED scanner and obtain information on a desired product, a link to the product's web site, or other useful information. Businesses too, will scan in bar code information directly from video displays into their desired host device. This scanned information is not formatted specifically for any business software and therefore is easily transferable between businesses which may use different software applications to manipulate the same data to suit their needs. This minimizes the need for many of the conversion programs or interpretation programs, commonly known as middleware, and provides data interchange across a wide variety of settings for a myriad of purposes.

Document US2012/0153015A1 discloses a system for accessing content corresponding to a matrix barcode, such as a video and/or audio content. The system may include a mobile computing device in communication with a content receiver. The mobile computing device may be configured to capture the matrix barcode, for example, via using an optical component and/or barcode scanner to record and/or scan the matrix barcode. The mobile computing device may also include a network interface component configured to transmit the matrix barcode to the content receiver. The content receiver may then receive the matrix barcode from the mobile computing device. The content receiver may include a processor to determine and/or access the content corresponding to the matrix barcode. The content receiver may then transmit the content to a display device.

### Summary of the invention

The aim of the present invention is to report information data specific to a multimedia receiver device to a head end, managing center or service provider in an efficient way particularly when the multimedia receiver device is not provided with a direct return channel.

The aim is achieved by a method for transmitting to a managing center, by a handheld device, information data related to a multimedia receiver device configured at least to receive and display digital audio / video content from a stream broadcast unidirectionally, comprising steps of:
- executing, by the multimedia receiver device, a self test program to generate information data related to a status of the multimedia receiver device,
- displaying, by the multimedia receiver device, the generated information data in form of an image representing a one dimensional or two dimensional barcode comprising at least a unique identifier, time information and specific status data associated to the multimedia receiver device,
- acquiring the image by the handheld device and sending the image to the managing center for processing by extracting from the received image the specific status data related to the multimedia receiver device.

A further object of the invention relates to a system comprising a multimedia receiver device configured at least to receive and display digital audio / video content from a stream broadcast unidirectionally, a handheld device configured to transmit information data related to the multimedia receiver device and a managing center configured to process received information data, wherein
- the multimedia receiver device comprises a module adapted to execute a self test program generating information data related to a status of the multimedia receiver device,
- the multimedia receiver device further comprises a screen to display the generated information data in form of an image representing a one dimensional or two dimensional barcode comprising at least a unique identifier, time information and specific status data associated to the multimedia receiver device,
- the handheld device is configured to acquire the displayed image for sending to the managing center via a mobile network and
- the managing center is provided with a processor for processing the received image by extracting the specific status data related to the multimedia receiver device.

The multimedia receiver device runs a self-test program in order to retrieve and generate information data related to a status of the multimedia receiver device. The latter creates a barcode by combining at least status information data, time and date and its own unique identifier. The barcode is then displayed in a predefined area of a screen coupled to the multimedia receiver device in order to be scanned by a handheld device preferably consisting of a smart phone provided with the appropriate application.

The scanned image is sent by the smart phone to a managing center for processing and analyzing the status information data for taking targeted actions related to the effective status of the multimedia receiver device. An acknowledgement and/or additional information may be returned in a message as SMS to the smart phone for example. Messages may also be sent through the broadcast channel (push mode) to the multimedia receiver device for display on the screen of the multimedia receiver device.

According to an embodiment the managing center may also send advertisements in relation to the received status information. A bidirectional communication or interactive communication is thus enabled between the multimedia receiver device and managing center even if the current broadcasting channel is unidirectional.

The managing center is defined here as an entity maintaining a plurality of multimedia receiver devices as well as a central database containing various data related to users, multimedia receiver devices identification, configuration, subscription data, usage history and statistics, etc. The managing center may also be associated to a head end or service provider managed by one or several multimedia operators.

### Brief description of the figure

The invention will be better understood with the following detailed description, which refers to the attached figure given as non-limitative example.

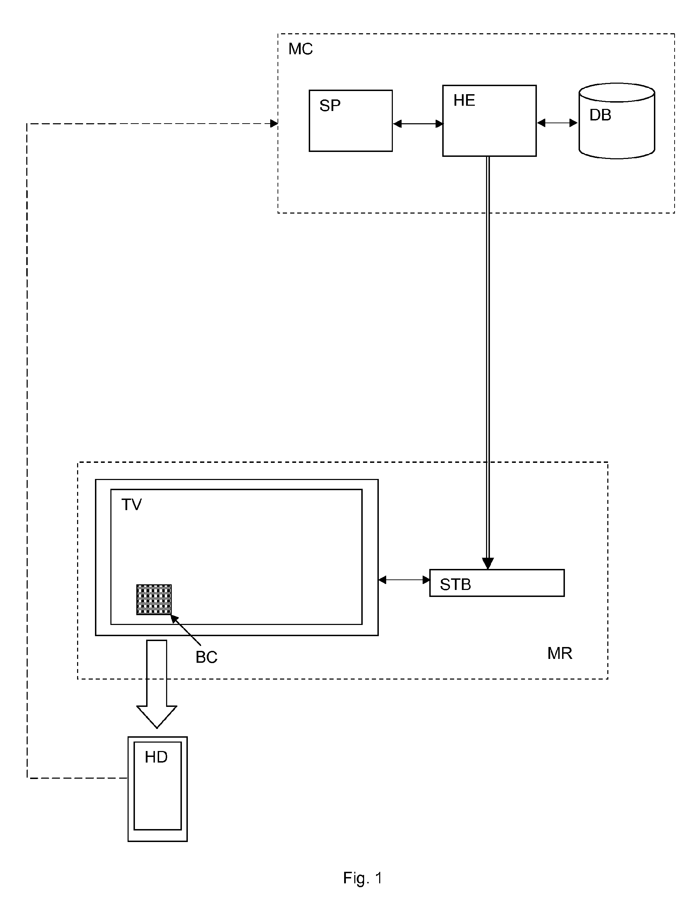

Figure 1 shows a block diagram of the system of the invention where a multimedia receiver device displays a status information data barcode readable by a handheld device configured to transmit this barcode to a managing center.

### Detailed description of the invention

The system illustrated by figure 1 comprises a multimedia receiver device MR preferably consisting of a set top box STB connected to a television set TV. In another configuration, the set top box may be integrated in the television set to form a single device. The multimedia receiver device MR receives digital audio / video content from a stream broadcast unidirectionally by an entity managed by one or more broadcast operator(s) such as a managing center MC associated to a head end HE and a service provider SP. The managing center MC maintains a plurality of multimedia receiver devices MR as well as a central database DB containing users' data coupled to multimedia receiver devices identification, configuration characteristics, subscription data, content usage history and statistics, etc.

According to the method and system of the invention, the multimedia receiver device MR generates information data related to its status by executing a self test program either at operating start or stop of the multimedia receiver device, periodically, at scheduled time or upon a request from a user by pressing a button on a remote control for example. This self test program may also be launched from a peripheral device associated to the multimedia receiver device MR such as an optical disc recorder / player, a personal computer or any other device. According to an embodiment, the self test program may start after a failure of a hardware and/or software component of the multimedia receiver device or a peripheral device is detected.

The generated information data is converted into an image BC displayed on a screen coupled to the multimedia receiver device MR such as the television set TV of figure 1 representing a one dimensional or two dimensional barcode. The two dimensional barcode or matrix barcode also called QR code is preferred for its higher data capacity up to more than 4000 alphanumeric characters while the one dimensional or linear barcode is limited to 10-15 characters. The matrix barcode including data in both the horizontal and vertical directions may contain almost any type of data and/or other information. For example, the matrix barcode may include numeric, alphanumeric, binary, symbols and the like. In particular, according to the invention, the information data comprise at least a unique identifier, time information and specific status data associated to the multimedia receiver device as for example error messages reporting failures of components included in the multimedia receiver device.

The specific status data of the multimedia receiver device may additionally comprises activity reports of the multimedia receiver device within a predetermined period, user profile including subscription data to broadcast services and/or purchased video-on-demand services, system information including hardware and software version information of peripherals associated to multimedia receiver device and / or global hardware and software version information of the multimedia receiver device.

The displayed image preferably representing a matrix barcode BC is acquired by a handheld or portable device HD like a smart phone, a personal assistant, a tablet personal computer etc. provided with a camera which scans the barcode BC and forwards it via a mobile communication network to the managing center MC in an MMS (Multimedia Messages Service) message for example. The image is preferably decoded by the managing center MC which verifies, analyzes and interprets the included information data with the help of corresponding data in the central database DB.

According to a further embodiment, the image is transferred to the handheld device HD via a local wireless channel based on Bluetooth technology or other radio frequency transmission protocol.

According to an embodiment the image may be partially or entirely decoded by the handheld device HD before forwarding to the managing center MC so that the user can know the status data and/or additional data contained in the matrix barcode BC. One or more URL (Uniform Resource Locator) address(es) or a phone number(s) may be extracted by the handheld device HD for getting further information on the multimedia receiver device MR or associated peripherals. The URL addresses may also be directed to manufacturer websites, advertising websites, promotional offers or other commercial information related to user system configuration and so on.

The matrix barcode BC image is generally displayed on an edge of the television set TV screen over a current television program displaying, on a particular display window or beside program information items in an electronic program guide created on the basis of the services information broadcast in the content stream. According to an embodiment, the image may be displayed at each above mentioned location on the display or only at a specific place at user choice in preferences set up menu.

In response to sending the image to the managing center MC, a response or acknowledgment may be sent to the handheld device HD. This response may further inform the user on actions to take in relation to the status of the multimedia receiver device MR. For example, the user may be informed on available updates and on the way to perform the updates. In case of failures, the response message invites the user to change a defective component such as a memory, a hard disc, a card reader, etc.

An advantage of the method is to allow a remote diagnosis and support to the users for maintaining their devices in an optimal operating state to minimize interventions of technicians on user's premises.

According to a further embodiment, messages from the managing center MC may be sent via the broadcast channel in push mode i.e. addressed to a specific user or multimedia receiver device MR. Messages may thus be displayed on the screen of the television set TV. A command embedded in the message may delete the displayed image until a new one is generated by the self test program.

The method of the invention may further be applied to VOD (Video On Demand) purchasing where the user selects a program on a displayed program guide and launches in the same time the self test program for generating a matrix barcode.

In this case, in addition to the multimedia receiver device / user identification, status and time data, the matrix barcode BC includes specific information related to the selected program.

The matrix barcode BC is then forwarded to the managing center and VOD services provider which will send an acknowledgment and broadcast the selected content to the multimedia receiver device MR. The user data extracted from the matrix barcode BC and completed thanks to the database DB are forwarded to a billing system managed by the service provider SP.

## Claims

1. Method for transmitting to a managing center, by a handheld device, information data related to a multimedia receiver device configured at least to receive and display digital audio / video content from a stream broadcast unidirectionally by a service provider, comprising steps of:
- executing, by the multimedia receiver device, a self test program to generate information data related to a status of the multimedia receiver device,
- displaying, by the multimedia receiver device, the generated information data in form of an image representing a one dimensional or two dimensional barcode comprising at least a unique identifier, time information and specific status data associated to the multimedia receiver device,
- acquiring the image by the handheld device, and sending the image to the managing center for processing the received image and extracting the specific status data related to the multimedia receiver device.

2. Method according to claim 1 **characterized in that** the handheld device acquires the image by reading with a camera the image displayed on a screen coupled to the multimedia receiver device, said image being forwarded via a mobile communication network to the managing center.

3. Method according to claim 1 **characterized in that** the handheld device acquires the image via a local wireless communications channel and forwards said image via a mobile communication network to the managing center.

4. Method according to claim 3 **characterized in that** the local wireless communications channel is based on Bluetooth technology.

5. Method according to anyone of claims 1 to 4 **characterized in that** the self test program is executed either at operating start or stop of the multimedia receiver device or associated peripherals, periodically, at scheduled time, after detection of a failure or upon a request from a user.

6. Method according to anyone of claims 1 to 5 **characterized in that** the specific status data of the multimedia receiver device comprises error messages reporting failures of components included in the multimedia receiver device.

7. Method according to anyone of claims 1 to 6 **characterized in that** the specific status data of the multimedia receiver device comprises activity reports of the multimedia receiver device within a predetermined period.

8. Method according to anyone of claims 1 to 7 **characterized in that** the specific status data of the multimedia receiver device comprises user profile including subscription data to broadcast services and/or purchased video-on-demand services.

9. Method according to anyone of claims 1 to 8 **characterized in that** the specific status data of the multimedia receiver device comprises system information including hardware and software version information of peripherals associated to multimedia receiver device and / or global hardware and software version information of the multimedia receiver device.

10. Method according to anyone of claims 1 to 9 **characterized in that** the image is displayed on an edge of the screen over a current television program displaying or in a particular display window.

11. Method according to anyone of claims 1 to 9 **characterized in that** the image is displayed beside program information items in an electronic program guide.

12. Method according to anyone of claims 1 to 11 further comprising a step of receiving by the handheld device an acknowledgement message from the managing center in response of the transmission of the image.

13. Method according to anyone of claims 1 to 11 further comprising a step of receiving by the multimedia receiver device an acknowledgement message from the service provider in response of the transmission of the image to the managing center, said message comprising a command to delete the displayed image.

14. Method according to anyone of claims 1 to 13 further comprising a step of pre-processing the image acquired by the handheld device before sending the image to the managing center, the pre-processing comprising extracting an URL and additional information for displaying on the handheld device.

15. A system comprising a multimedia receiver device configured at least to receive and display digital audio / video content from a stream broadcast unidirectionally, a handheld device configured to transmit information data related to the multimedia receiver device and a managing center configured to process received information data, wherein
- the multimedia receiver device comprises a module adapted to execute a self test program generating information data related to a status of the multimedia receiver device,
- the multimedia receiver device further comprises a screen to display the generated information data in form of an image representing a one dimensional or two dimensional barcode comprising at least a unique identifier, time information and specific status data associated to the multimedia receiver device,
- the handheld device is configured to acquire the displayed image for sending to the managing center via a mobile network and
- the managing center is provided with a processor for processing the received image by extracting the specific status data related to the multimedia receiver device.
